# EUROPEAN PATENT APPLICATION

(11) **EP 2 492 946 A2**
(43) Date of publication of application: **29.08.2012**
(21) Application number: 12386004.1
(22) Date of filing: 15.02.2012
(51) Int. Cl.: H01H 83/14

(54) **Digital sensitivity control for electrical power leakage**

(30) Priority: 24.02.2011 GR 20110100110
(71) Applicant: Kourvoulis, Konstantinos, 54655 Thessaloniki (GR); Noitsis, Grigorios, 54645 Thessaloniki (GR)
(72) Inventor: Kourvoulis, Konstantinos, 54655 Thessaloniki (GR); Noitsis, Grigorios, 54645 Thessaloniki (GR)

(57) **Abstract**

It is a Digital Sensitivity control for Electrical power leakage used in all electrical installations where the relay prevents electric shock from power leakages. The digital control circuit consists of (1) where the transformer (1a) gives power to the integrated chip(1b) and screen (1c), the circuit (2) concerning the operation of the integrated chip(1b), the circuit (3) concerning the operation of the digital display (1c), the circuit (4) on the activation of the sensitivity switches (5) and finally the main body of the device (6).

## Description

The invention concerns a power leakage controller. There are different types of controller.

Ours is a special type of digital display that differs from others in that it gives us digitally at any time the value of the current leakage by providing us with the ability to regulate it. Its function is to increase the sensitivity of the leakage relay which is activated by today's standards at 30mA, giving us the possibility to adjust the device from 30mA to as low as 1 mA ensuring 100% coverage of any power leak even as little as 1mA. Its advantage is that a person can come into contact with electricity and even in the most adverse conditions (stepping barefoot in water), when using the controller the person will notice merely a momentary sting. It is used in all the electrical installations where there is a leakage relay. One practical application is given in the attached drawings.

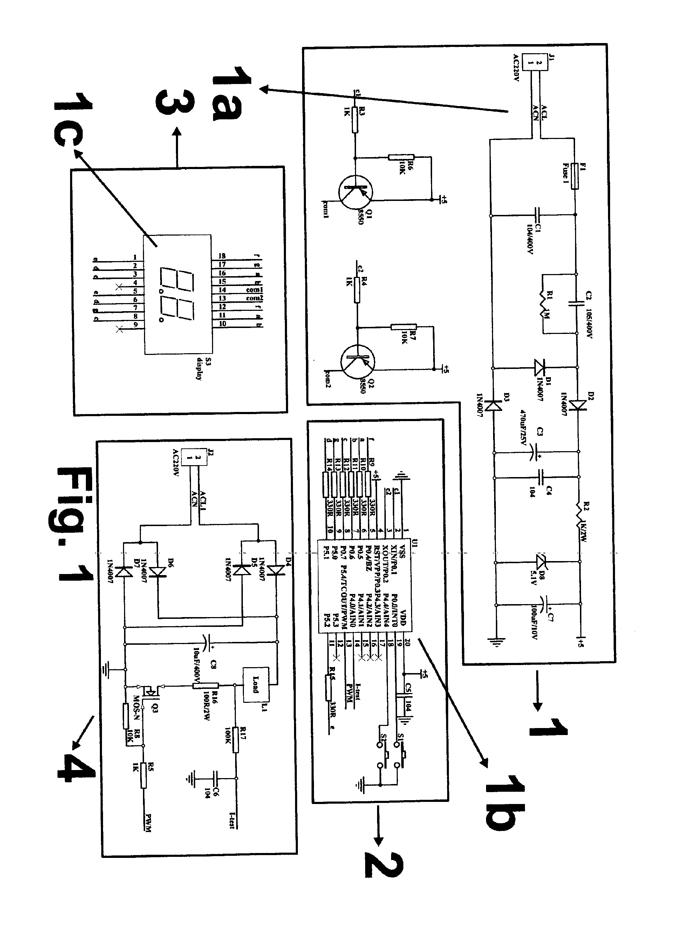

In Figure 1 we see the electrical diagram of operation of the digital controller.

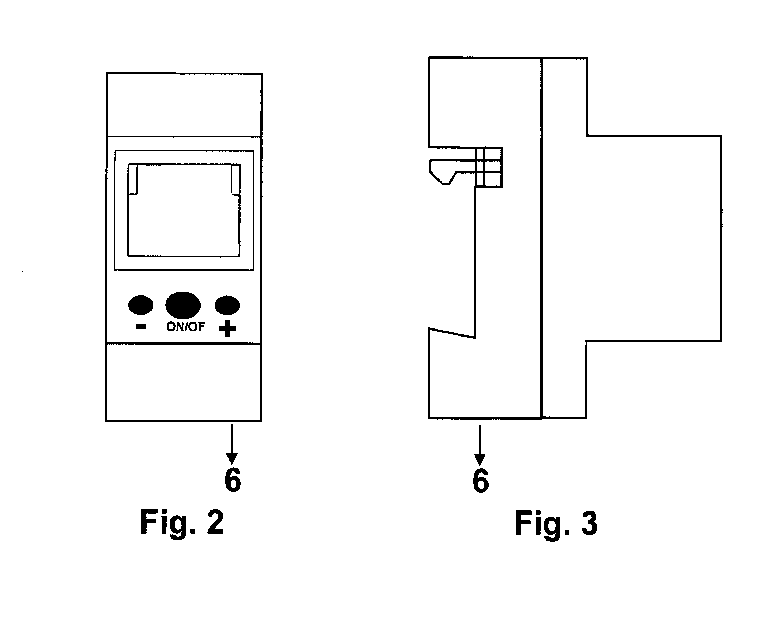

In Figure 2 we see the front panel of the device.

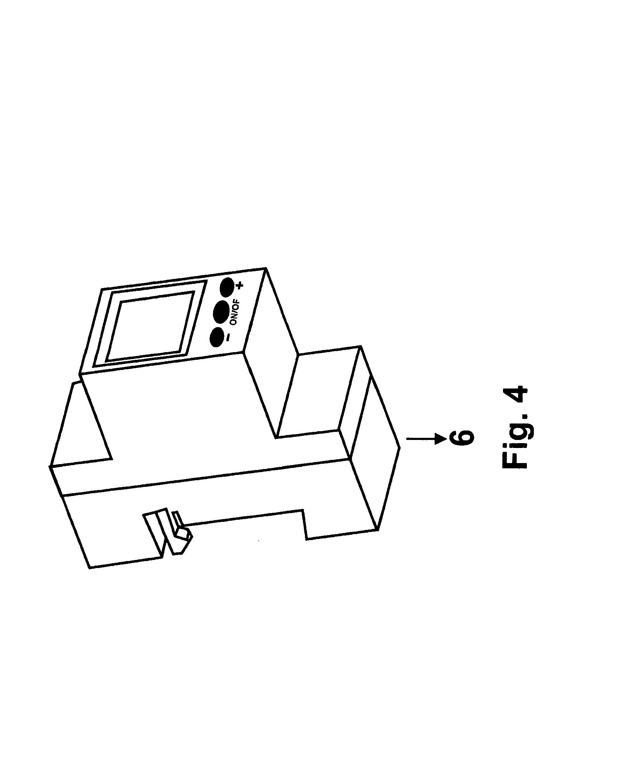

In Figure 3 we see the side view of the device. In Figure 4 we see a long shot of the digital controller. With reference to the drawings, the sensitivity regulator consists of the main body of the device (6) in which are found 4 operation circuits and specifically: The circuit (1) where the transformer (1a) gives power to the integrated chip (1b) and screen (1c). The circuit (2) for the operation of the integrated chip(1b). The circuit (3) for the operation of the digital display (1c). And finally the circuit (4) on the activation of sensitivity switches (5)

## Claims

1. A Digital Sensitivity control for Electrical power leakageis used for personal electric shock protection and which is **characterized by** the fact that the circuit consists of (1) where the transformer (1a) gives power to the integrated chip(1b) and screen (1c) the circuit (2) concerning the operation of the integrated chip (1b), the circuit (3) concerning the operation of the digital display (1c), the circuit (4) on the activation of the sensitivity switches (5) and finally main body of the device (6)
